# EUROPEAN PATENT APPLICATION

(11) **EP 4 817 780 A1**
(43) Date of publication of application: **07.10.2026**
(21) Application number: 24929015.6
(22) Date of filing: 16.05.2024
(51) Int. Cl.: B23K 26/21, B23K 26/70, B23K 101/36

(54) **WELDING APPARATUS, WELDING METHOD, AND WELDING SYSTEM**

(30) Priority: 14.03.2024 CN 202420490748 U
(71) Applicant: Contemporary Amperex Technology Co., Limited, Ningde, Fujian 352100 (CN)
(72) Inventor: WANG, Tengteng, Ningde, Fujian 352100 (CN); YU, Xinglu, Ningde, Fujian 352100 (CN); QUE, Tianxiang, Ningde, Fujian 352100 (CN)
(74) Representative: Ziebig Hengelhaupt Intellectual Property Attorneys Patentanwaltskanzlei PartGmbB
(86) International application number: PCT/CN2024/093752
(87) International publication number: WO 2025/189550

(57) **Abstract**

A welding apparatus configured to weld to a top cover (20) adapter tabs (101) connected to bare cells (10). The welding apparatus comprises a welding mechanism (1), a positioning mechanism (2) and a distance-measuring mechanism (3). The welding mechanism (1) comprises laser heads (11). The positioning mechanism (2) comprises a first positioning seat (21) for the placement of the top cover (20) and second positioning seats (22) for the placement of the bare cells (10), and the positioning mechanism (2) can move closer to or away from the welding mechanism (1) in a forward/backward movement direction. The distance-measuring mechanism (3) is disposed on the side of the positioning mechanism (2) away from the welding mechanism (1) in the forward/backward movement direction, and the distance-measuring mechanism (3) is configured to measure the distance between the distance-measuring mechanism (3) and the welding mechanism (1) in the forward/backward movement direction. By means of a distance measurement result of the distance-measuring mechanism (3), the welding apparatus can conduct welding only after the positioning mechanism (2) is located in a target welding position, such that the displacement of the positioning mechanism (2) is more reliable, making the defocusing amount more stable and the welding quality better. The present disclosure further relates to a welding method and a welding system.

## Description

### CROSS-REFERENCE TO RELATED APPLICATIONS

The present disclosure claims priority to Chinese Patent Application No. 202420490748.3, filed with the China National Intellectual Property Administration on March 14, 2024 and entitled "WELDING DEVICE AND WELDING SYSTEM", which is incorporated herein by reference in its entirety.

### TECHNICAL FIELD

The present disclosure relates to the field of battery manufacturing technologies, and in particular, to a welding device, a welding method, and a welding system.

### BACKGROUND

New energy batteries are more widely used in lives and industries. For example, new energy vehicles carrying batteries have been widely used. In addition, batteries are more used in an energy storage field, or the like.

Welding is an important craft in a battery production and manufacturing process. Especially, in a laser welding craft, a distance between a laser head and a to-be-welded part is particularly important. If the distance between the laser head and the to-be-welded part cannot be well measured, pseudo welding, poor welding, or the like probably occurs, and welding quality is seriously affected. Therefore, how to measure the distance between the laser head and the to-be-welded part to improve the welding quality is one of research topics in the industry.

### SUMMARY

To resolve the foregoing technical problem, the present disclosure provides a welding device, a welding method, and a welding system that have good welding quality and high reliability.

The present disclosure is implemented by the following technical solutions.

According to a first aspect of the present disclosure, a welding device is provided. The welding device is configured to weld, to a top cover, adapter tabs connected to bare battery cells. The welding device includes: a welding mechanism, including a laser head; a positioning mechanism, including a first positioning seat configured to place the top cover and second positioning seats configured to place the bare battery cells, where the positioning mechanism is capable of moving close to or away from the welding mechanism along a back and forth direction; and a ranging mechanism, where the ranging mechanism is fixedly disposed on a side of the positioning mechanism that is away from the welding mechanism along the back and forth direction, and the ranging mechanism is configured to measure a distance between the ranging mechanism and the positioning mechanism along the back and forth direction.

Because the welding device includes the ranging mechanism, after the positioning mechanism moves close to the welding mechanism along the back and forth direction, the distance between the ranging mechanism and the positioning mechanism along the back and forth direction can be measured by using the ranging mechanism, to determine whether the positioning mechanism moves in position, that is, determine whether the positioning mechanism moves by a preset distance. Therefore, a distance between the positioning mechanism and the welding mechanism can be proper. Further, displacement of the positioning mechanism is more reliable, a defocus amount of the welding mechanism is more stable during welding, a probability that pseudo welding, poor welding, or the like occurs during welding performed by the welding mechanism is reduced, reliability and stability of the welding device are improved, and welding quality is better.

In addition, because the ranging mechanism is fixedly disposed on the side of the positioning mechanism that is away from the welding mechanism along the back and forth direction, that is, disposed below the positioning mechanism, space below the positioning mechanism can be effectively used, thereby improving space utilization. In addition, interference is not easily caused among the ranging mechanism, the bare battery cells and the top cover that are placed in the positioning mechanism, and the welding mechanism above the positioning mechanism, so that a probability that a bad case occurs, for example, the bare battery cells or the top cover is moved or worn, can be reduced, and measurement accuracy of the ranging mechanism and working stability of the welding mechanism can be improved.

In some embodiments, the ranging mechanism includes a laser rangefinder. The laser rangefinder is fixedly disposed on a side of the first positioning seat that is away from the welding mechanism along the back and forth direction. An avoidance hole is provided on the first positioning seat. When the top cover is placed on the first positioning seat, the avoidance hole is configured to enable laser emitted by the laser rangefinder to pass through and be irradiated on a position of a terminal post of the top cover.

The laser rangefinder has high precision, a small error, and a high measurement speed, so that the ranging mechanism can efficiently and rapidly perform measurement, and accuracy of a measurement result is high. In addition, because the adapter tabs are welded to the terminal post of the top cover, and the adapter tabs and the terminal post of the top cover are formed into a to-be-welded part, the first positioning seat is provided with the avoidance hole that enables the laser emitted by the laser rangefinder to pass through and be irradiated on the terminal post of the top cover, so that the laser rangefinder can more accurately measure a distance between the laser rangefinder and the terminal post of the top cover (the to-be-welded part), thereby further improving the measurement accuracy. Therefore, the defocus amount of the welding mechanism is more stable.

In some embodiments, the welding mechanism further includes a pressing plate. The pressing plate is configured to press the top cover along the back and forth direction during welding. The welding device includes a jacking apparatus. Under driving of the jacking apparatus, the positioning mechanism is capable of rising along the back and forth direction to a welding position at which the top cover is enabled to be in contact with the pressing plate, or falling from the welding position.

Therefore, after positioning of the bare battery cells and the top cover in the positioning mechanism is completed, movement close to the welding mechanism along the back and forth direction can be simply implemented by using the jacking apparatus, which has a simple structure, an easy control manner, and a high automation degree. In addition, under driving of the jacking apparatus, the positioning mechanism can rise to the welding position in contact with the pressing plate, and the pressing plate can press against the to-be-welded part, to reduce a probability that a to-be-welded workpiece moves relative to the positioning mechanism or to-be-welded parts move relative to each other, thereby effectively improving welding stability.

In some embodiments, a welding channel extending through the pressing plate along the back and forth direction is formed on the pressing plate. An equivalent diameter of the welding channel along a first direction gradually decreases. An opening of one end of the welding channel that has a largest equivalent diameter faces the laser head, and an opening of one end of the welding channel that has a smallest equivalent diameter faces the top cover. The first direction is perpendicular to the back and forth direction.

Therefore, it is beneficial for a laser beam to more accurately enter the welding channel and focus in the welding channel, and it is beneficial for energy of the laser beam entering the welding channel to better focus on the to-be-welded part of the workpiece, thereby reducing a probability that welding is poor due to insufficient welding energy.

In some embodiments, the welding mechanism further includes the pressing plate. The pressing plate is configured to press the top cover along the back and forth direction during welding. The welding device further includes absorption apparatuses, configured to provide a negative pressure. A dust removal channel is formed inside the pressing plate. The dust removal channel extends through the pressing plate and is connected to the absorption apparatuses.

Therefore, impurities, such as welding slags, generated by the welding mechanism during welding may be discharged to the outside of the welding device by the absorption apparatuses through the dust removal channel inside the pressing plate, thereby implementing dust removal during welding, reducing a probability that the welding slags spatter, improving cleanliness of a welding environment, and further improving the welding quality.

In some embodiments, a plurality of dust removal ports are provided in the dust removal channel, and the dust removal ports communicate with the dust removal channel.

Each of the dust removal ports is correspondingly connected to one of the absorption apparatuses. Alternatively, the dust removal ports are respectively connected to dust removal tubes, and the dust removal tubes are jointly connected to one of the absorption apparatuses.

The plurality of dust removal ports are provided, so that the impurities can be more thoroughly removed, thereby further improving the welding quality.

In some embodiments, the first positioning seat includes a plurality of dowels. The plurality of dowels enclose to form a positioning region. The positioning region is used to position the top cover.

Therefore, positioning of the top cover can be more facilitated, so that the top cover can be always located in the positioning region enclosed by the dowels during welding, thereby improving welding reliability.

In some embodiments, chamfers are formed from top end surfaces to side circumferential surfaces of the plurality of dowels.

Because the chamfers are formed from the top end surfaces to the side circumferential surfaces of the dowels, and the chamfers can have a guiding function, the top cover can more smoothly enter the positioning region. In addition, the chamfers formed by the dowels can further reduce a probability that the top cover is damaged when the top cover enters the positioning region, thereby improving reliability of the positioning mechanism.

In some embodiments, the first positioning seat includes a plurality of position-limit edges. The plurality of position-limit edges enclose to form a positioning region. The positioning region is used to position the top cover. A side of the position-limit edges that faces the positioning region has an inclined guide surface.

Therefore, positioning of the top cover can be more facilitated, so that the top cover can be always located in the positioning region enclosed by the position-limit edges during welding, thereby improving welding reliability. In addition, because the side of the position-limit edges that faces the positioning region has the inclined guide surface, and the inclined guide surface can have a guiding function, the top cover can more smoothly enter the positioning region. In addition, the inclined guide surface formed by the position-limit edges can further reduce a probability that the top cover is damaged when the top cover enters the positioning region, thereby improving reliability of the positioning mechanism.

In some embodiments, the second positioning seats include: a base; a first push plate, where the first push plate is disposed on the base and capable of moving forward or backward along the first direction, and is configured to push and press the bare battery cells along the first direction; and two reference plates. The two reference plates are arranged on opposite sides of the first push plate along the first direction and separated by space used to place the bare battery cells. The two reference plates are arranged spaced away along a second direction. The two reference plates are configured to block the bare battery cells. The reference plates are capable of performing reciprocating movement before a backoff position and a working position along the second direction. The first direction, the second direction, and the back and forth direction are perpendicular to each other.

Therefore, the bare battery cells can be pushed to a preset position through a pushing and pressing operation of the first push plate, and the bare battery cells can be well fixed between the first push plate and the reference plate, thereby implementing good positioning, reducing a probability that the bare battery cells move during welding, and improving the welding reliability. In addition, because the first push plate moves forward or backward along the first direction to implement the corresponding pushing and pressing operation, the first push plate can adapt to bare battery cells of different sizes, has good compatibility, and facilitates flexible production.

In addition, because there are two reference plates, and the two reference plates can perform reciprocating movement between the backoff position and the working position along the second direction, the reference plates can move to the backoff position along the second direction when the positioning mechanism positions the top cover, so that interference with the top cover is not easily caused, a probability that the top cover is damaged is reduced, and placement and positioning of the top cover are further facilitated. In addition, the reference plates can further move to the working position along the second direction when the positioning mechanism positions the bare battery cells, so that a better position-limit function is achieved for the bare battery cells, and positioning of the bare battery cells is further facilitated.

In some embodiments, a first push-plate guide rail extending along the first direction is formed on the base. A first push-plate sliding member is formed on a side of the first push plate that faces the first push-plate guide rail. The first push plate performs reciprocating movement along the first push-plate guide rail through cooperation between the first push-plate sliding member and the first push-plate guide rail.

Therefore, the bare battery cells can be easily pushed, pressed, and tightly clamped along the first direction.

In some embodiments, the two reference plates are respectively disposed on two mobile stands. The two mobile stands are arranged spaced away along the second direction on opposite sides of the positioning mechanism, and are connected to the positioning mechanism via a connection platform. A mobile-stand guide rail extending along the second direction is provided on the connection platform. The mobile stands are disposed on the mobile-stand guide rail in a manner in which the mobile stands are capable of moving along the mobile-stand guide rail.

Therefore, movement of the two reference plates between the working position and the backoff position along the second direction can be easily implemented, a structure is simple, and a control manner is easy. In addition, the mobile-stand guide rail can reduce friction and shake when the mobile stands move along the second direction, so that movement of the mobile stands is smoother and more stable, and therefore, movement that is of the reference plates disposed on the mobile stands and that is along the second direction is smoother and more stable, and reliability is better. In addition, energy consumption is small, which is more beneficial to energy conservation and environment protection.

In some embodiments, there are two second positioning seats, and the two second positioning seats are located on opposite sides of the first positioning seat along the first direction.

Therefore, the positioning mechanism can simultaneously position and fix two bare battery cells, so that positioning efficiency is improved, thereby improving welding efficiency.

In some embodiments, a reference-plate guide rail extending along the first direction is provided on each of the mobile stands. Each of the reference plates of each of the second positioning seats is disposed on the reference-plate guide rail in a manner in which the reference plate is capable of moving along the reference-plate guide rail.

Therefore, the reference plates of each of the second positioning seats can further perform reciprocating movement along the first direction along the reference-plate guide rail, so that a spacing distance that is between the two bare battery cells respectively positioned in the two second positioning seats and that is along the first direction can be defined based on different situations, and adaptability of the positioning mechanism is better. In addition, the reference-plate guide rail can reduce friction and shake when the reference plates move along the first direction, so that movement of the reference plates is smoother and more stable, and reliability is better. In addition, energy consumption is small, which is more beneficial to energy conservation and environment protection.

In some embodiments, the second positioning seats further include: the base; and two second push plates. The two second push plates are arranged opposite to each other along the second direction and are disposed on the base in a manner in which the two second push plates are capable of approaching or retreating from each other along the second direction. The two second push plates are configured to push and press the bare battery cells along the second direction.

Therefore, a pushing and pressing operation can be performed on the bare battery cells along the second direction through an action that the two second push plates approach each other, so that the bare battery cells are centered, and the bare battery cells are tightly clamped between the two second push plates. Therefore, the bare battery cells are positioned along the second direction, a probability that the bare battery cells move during welding is reduced, and the welding reliability is improved. In addition, because the two second push plates move close to each other along the second direction to implement positioning, tight clamping, and fixing of the bare battery cells, the second push plates can adapt to bare battery cells of different sizes, have good compatibility, and facilitate flexible production.

In some embodiments, the second positioning seats further include a lead screw extending along the second direction, and the lead screw is rotatably disposed on the base. The two second push plates are connected to the lead screw, and are capable of approaching or retreating from each other along the lead screw as the lead screw rotates.

Therefore, movement that the two second push plates approach each other can be implemented through rotation of the lead screw, so that the bare battery cells can be easily and reliably positioned by using a simple structure and in an automatic manner.

In some embodiments, the second push plates each includes a plate-shaped member and two pushing blocks. The plate-shaped member includes a first plate body extending along the first direction and two second plate bodies extending along the back and forth direction. The two second plate bodies are arranged at opposite ends of the first plate body along the first direction. The two pushing blocks are respectively arranged on sides of the two second plate bodies that face away from the first plate body along the back and forth direction.

This structure of the second push plate can reserve large operation space above the second positioning seats, so that interference with a component of another apparatus or mechanism above the positioning mechanism is not easily caused, and the reliability of the welding device can be improved.

According to a second aspect of the present application, a welding method is provided. A welding device is used to weld adapter tabs on bare battery cells to a top cover. The welding device includes a welding mechanism, a positioning mechanism, and a ranging mechanism. The positioning mechanism includes a first positioning seat configured to place the top cover and second positioning seats configured to place the bare battery cells. The positioning mechanism is capable of moving close to or away from the welding mechanism along a back and forth direction. The welding method includes: a placing step: respectively placing the top cover and the bare battery cells on the first positioning seat and the second positioning seats; a jacking step: enabling the positioning mechanism to move close to the welding mechanism along the back and forth direction; a ranging step: enabling the ranging mechanism to measure a distance between the ranging mechanism and the positioning mechanism along the back and forth direction; and a welding step: when it is determined, based on a ranging result, that the positioning mechanism is jacked in position, enabling the welding mechanism to emit laser to perform a welding operation.

Therefore, after the positioning mechanism moves close to the welding mechanism along the back and forth direction, the distance between the ranging mechanism and the positioning mechanism along the back and forth direction can be measured by using the ranging mechanism, to determine whether the positioning mechanism moves in position, that is, determine whether the positioning mechanism moves by a preset distance. Therefore, a distance between the positioning mechanism and the welding mechanism is proper. Further, displacement of the positioning mechanism is more reliable, a defocus amount of the welding mechanism is more stable during welding, a probability that pseudo welding, poor welding, or the like occurs during welding performed by the welding mechanism is reduced, reliability and stability of the welding device are improved, and welding quality is better.

In some embodiments, the placing step further includes: a first positioning step: enabling a first push plate to move forward along a first direction until the bare battery cells abut between reference plates and the first push plate; and a second positioning step: enabling two second push plates to approach each other until the bare battery cells are pushed to a specified position.

Therefore, the bare battery cells placed in the second positioning seats can be pushed to the specified position according to the first positioning step and the second positioning step, to implement good positioning, so that the adapter tabs of the bare battery cells can lap a terminal post of the top cover, thereby facilitating a subsequent welding operation. In addition, a probability that the bare battery cells move during welding can be reduced, thereby improving welding reliability.

According to a third aspect of the present disclosure, a welding system is provided, configured to weld bare battery cells to a top cover. The welding system includes: a top-cover conveyor, configured to convey the top cover; a bare-battery-cell conveyor, configured to convey the bare battery cells connected to adapter tabs; the welding device provided in the first aspect of the present disclosure; and a grabbing and placing apparatus, configured to grab the top cover on the top-cover conveyor and the bare battery cells on the bare-battery-cell conveyor, and respectively place the top cover and the bare battery cells in a first positioning seat and second positioning seats of a positioning mechanism of the welding device, to weld the adapter tabs on the bare battery cells to the top cover by using a welding mechanism of the welding device.

The top cover and the bare battery cells are respectively conveyed on the top-cover conveyor and the bare-battery-cell conveyor, and the top cover and the bare battery cells can be grabbed and placed in the positioning mechanism of the welding device in an automatic manner by using the grabbing and placing apparatus. Therefore, an automation degree of the welding system can be improved, thereby improving production efficiency of an entire line.

In addition, because the top cover and the bare battery cells can be respectively positioned in the first positioning seat and the second positioning seats of the positioning mechanism, during welding performed by the welding device, neither the top cover nor the bare battery cells easily move, so that welding reliability can be improved. In addition, because the welding device includes a ranging mechanism, displacement that is of the positioning mechanism and that is close to the welding mechanism is more reliable, a defocus amount of the welding mechanism is more stable during welding, a probability that pseudo welding, poor welding, or the like occurs during welding performed by the welding mechanism is reduced, and reliability and stability of the welding device are improved.

### Invention effects

According to the present disclosure, a welding device, a welding method, and a welding system that have a stable defocus amount, good welding quality, and high reliability are provided.

### BRIEF DESCRIPTION OF THE DRAWINGS

A person of ordinary skill in the art can clearly understand various other advantages and benefits by reading detailed descriptions of preferred embodiments below. The accompanying drawings are merely intended to illustrate the preferred embodiments and are not intended to limit the present disclosure. In addition, in all the accompanying drawings, same parts are indicated by a same reference numeral. In the accompanying drawings:
FIG. 1 is a schematic diagram of a three-dimensional structure of a welding device according to some embodiments of the present disclosure;
FIG. 2 is another schematic diagram of a three-dimensional structure of a welding device according to some embodiments of the present disclosure;
FIG. 3 is a schematic diagram of a planar structure of a welding device according to some embodiments of the present disclosure;
FIG. 4 is a schematic diagram of a partially enlarged view of a structure of a welding device according to some embodiments of the present disclosure;
FIG. 5 is a schematic diagram of a planar structure when bare battery cells are welded to a top cover according to some embodiments of the present disclosure;
FIG. 6 is a schematic diagram of a three-dimensional structure of a pressing plate according to some embodiments of the present disclosure;
FIG. 7 is a schematic diagram of planar structures of a laser head and a pressing plate according to some embodiments of the present disclosure;
FIG. 8 is a planar cross-sectional view of a pressing plate according to some embodiments of the present disclosure, and schematically shows absorption apparatuses;
FIG. 9 is a schematic flowchart of a welding method according to some embodiments of the present disclosure; and
FIG. 10 is another schematic flowchart of a welding method according to some embodiments of the present disclosure.

### Descriptions of reference numerals:

1-welding mechanism; 11-laser head; 12-pressing plate; 121-welding channel; 122-dust removal channel; 1221-dust removal port; 2-positioning mechanism; 21-first positioning seat; 211-avoidance hole; 212-dowel; 22-second positioning seat; 22a-base; 221-first push plate; 2211-first push-plate sliding member; 222-reference plate; 223-first push-plate guide rail; 23-mobile stand; 231-mobile-stand sliding member; 232-reference-plate guide rail; 24-connection platform; 241-mobile-stand guide rail; 25-second push plate; 251-plate-shaped member; 2511-first plate body; 2512-second plate body; 252-pushing block; 3-ranging mechanism; 4-jacking apparatus; 5-absorption apparatus; 10-bare battery cell; 101-adapter tab; 20-top cover; 201-terminal post; and 100-welding device.

### DETAILED DESCRIPTION

The following describes in detail the embodiments of technical solutions of the present disclosure with reference to the accompanying drawings. The following embodiments are merely used to describe technical solutions of the present disclosure more explicitly, and therefore they are merely used as examples and do not constitute a limitation to the protection scope of the present disclosure.

Unless otherwise defined, all of the technical and scientific terms used in this specification have the same meanings as those understood by persons skilled in the art in the technical field of the present disclosure; the terms used in this specification are merely for the purpose of describing specific embodiments, rather than for limiting the present disclosure; the terms "including" and "having" and any variation thereof in the present disclosure intend to encompass non-exclusive inclusions.

In descriptions of the embodiments of the present disclosure, the terms "first", "second", "third", and the like are merely intended to distinguish between different objects, and shall not be understood as an indication or implication of relative importance or implicit indication of the number, specific sequence or dominant-subordinate relationship of indicated technical features. In the descriptions of the embodiments of the present disclosure, "a plurality of" means at least two unless otherwise specifically stated.

The term "embodiment" described in this specification means that specific features, structures or characteristics in combination with descriptions of the embodiments may be incorporated in at least one embodiment of the present disclosure. Appearances of the phrase in various locations in this specification are not necessarily all referring to a same embodiment, nor are separate or alternative embodiments mutually exclusive of another embodiment. It is explicitly and implicitly understood by a person skilled in the art that embodiments described in this specification may be combined with another embodiment.

In the descriptions of the embodiments of the present disclosure, the term "and/or" describes only an association relationship for describing associated objects and represents that three relationships may exist. For example, A and/or B may represent the following three cases: A alone, both A and B, and B alone. In addition, the character "/" in this specification generally indicates that the related objects are an "or" relationship.

In the descriptions of the embodiments of the present disclosure, a direction or positional relationship indicated by terms such as "length", "width", "thickness", "up", "down", "front", "back", "left", "right", "vertical", "horizontal", "top", "bottom", "in", and "out" is a direction or positional relationship based on illustrations in the drawings, and is merely intended for ease or brevity of description of the embodiments of the present disclosure, but does not necessarily mean or imply that the indicated device or component is provided in the specified direction or constructed, operated, or used in the specified direction. Therefore, such terms are not to be understood as a limitation on the embodiments of the present disclosure.

In the descriptions of the embodiments of the present disclosure, unless otherwise expressly specified and limited, the technical terms "mounting", "connected", "connecting", "fixing", and the like shall be understood in a broad sense, which, for example, may be a fixed connection, or a detachable connection or an integral connection; may also be a mechanical connection, or an electrical connection; may be a direct connection, or an indirect connection through an intermediate medium, and may be a communication within two elements or an interactive relationship between two elements. A person of ordinary skill in the art can understand specific meanings of these terms in the present disclosure based on specific situations.

In the descriptions of the embodiments of the present disclosure, unless otherwise expressly specified and limited, the technical term "contact" should be understood in a broad sense, and may be direct contact, or may be contact through an intermediate layer, may be contact with almost no substantial interaction force between the two that are in contact, or may be contact with an interaction force between the two that are in contact.

### The present disclosure is described in detail below.

Currently, new energy batteries are more widely used in lives and industries. New energy batteries are not only used in energy storage power systems such as water power plant, fire power plant, wind power plant and solar power plant, but also in electric transportations such as electric bicycles, electric motorcycles, electric vehicles, as well as in aerospace and other fields. With continuous expansion of application fields of power batteries, market demands for power batteries are also expanding.

In a battery production and manufacturing process, welding is always one of important steps in a product production craft. There are many workpieces that need to be welded. For example, a tab and an adapter tab, the adapter tab and a terminal post of a top cover, and the terminal post and a bus component need to be welded. However, in a process of a welding operation, especially, in a laser welding process, a distance between a laser head and a to-be-welded part is particularly important. If the distance between the laser head and the to-be-welded part cannot be well measured, pseudo welding, poor welding, or the like probably occurs, and welding quality is seriously affected.

In a related technology, after a to-be-welded workpiece is positioned on a positioning mechanism of a welding device, and displacement that is of the positioning mechanism and that is close to a welding mechanism is completed, a welding operation is usually started directly. The displacement that is of the positioning mechanism and that is close to the welding mechanism may be deviated, and the displacement may not be accurate and in position each time. Consequently, a bad case, such as poor welding or pseudo welding, may occur, and welding quality is seriously affected.

The present disclosure provides welding device for the foregoing problem in the related technology. The welding device is configured to weld, to a top cover, adapter tabs connected to bare battery cells. The welding device includes a welding mechanism, a positioning mechanism, and a ranging mechanism. The welding mechanism includes a laser head. The positioning mechanism includes a first positioning seat configured to place the top cover and second positioning seats configured to place the bare battery cells. The positioning mechanism is capable of moving close to or away from the welding mechanism along a back and forth direction. The ranging mechanism is fixedly disposed on a side of the first positioning seat that is away from the welding mechanism along the back and forth direction. The ranging mechanism is configured to measure a distance between the ranging mechanism and the positioning mechanism along the back and forth direction.

Because the welding device includes the ranging mechanism, after the positioning mechanism moves close to the welding mechanism along the back and forth direction, the distance between the ranging mechanism and the positioning mechanism along the back and forth direction can be measured by using the ranging mechanism, to determine whether the positioning mechanism moves in position, that is, determine whether the positioning mechanism moves along the back and forth direction by a specified distance, so that a distance between the positioning mechanism and the welding mechanism is proper. Therefore, displacement of the positioning mechanism is more reliable, a defocus amount of the welding mechanism is more stable during welding, a probability that pseudo welding, poor welding, or the like occurs during welding performed by the welding mechanism is reduced, reliability and stability of the welding device are improved, and welding quality is better.

In addition, because the ranging mechanism is fixedly disposed on the side of the positioning mechanism that is away from the welding mechanism along the back and forth direction, that is, disposed below the positioning mechanism, space below the positioning mechanism can be effectively used, thereby improving space utilization. In addition, interference is not easily caused among the ranging mechanism, the bare battery cells and the top cover that are placed in the positioning mechanism, and the welding mechanism above the positioning mechanism, so that a bad case, for example, the bare battery cells or the top cover is moved or worn, can be reduced, and measurement accuracy of the ranging mechanism and working stability of the welding mechanism can be improved.

The pressing plate fixture in this embodiment of the present disclosure may be used in a battery production process, for example, configured to weld the adapter tabs of the bare battery cells and the terminal post of the top cover. Certainly, a person skilled in the art should understand that the welding device provided in this embodiment of the present disclosure is not only configured to weld the adapter tabs of the bare battery cells and the terminal post of the top cover in the battery production and manufacturing process, but also configured to weld another to-be-welded workpiece in another production line.

In this embodiment of the present disclosure, the bare battery cell may be a battery cell.

The battery cell refers to a basic unit that can implement mutual conversion between chemical energy and electric energy, and may be used to produce a battery module or a battery pack, to be configured to supply power to a power consuming apparatus.

The battery cell may be a secondary battery. The secondary battery is a battery cell that can activate an active material through charging after the battery cell is discharged, to continue to use the battery cell.

The battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like. This is not limited in this embodiment of the present disclosure.

Generally, the battery cell includes an electrode assembly. The electrode assembly includes a positive electrode, a negative electrode, and a separator. During charge and discharge of the battery cell, active ions (such as lithium ions) are shuttled between the positive electrode and the negative electrode through intercalation and deintercalation. Disposed between the positive electrode and the negative electrode, the separator serves to prevent a short circuit between the positive electrode and the negative electrode and allow passage of the active ions.

In some embodiments, the battery cell may further include an electrolyte, and the electrolyte conducts ions between the positive electrode and the negative electrode. A type of the electrolyte is not specifically limited in the present disclosure, and may be selected based on a requirement. The electrolyte may be liquid, gelled or all solid.

In some embodiments, the battery cell may include a shell. The shell is configured to encapsulate components such as the electrode assembly and the electrolyte. The shell may be a steel shell, an aluminum shell, a plastic shell (for example, polypropylene), a composite metal shell (for example, a composite shell of copper and aluminum), an aluminum laminated film, or the like.

For example, the battery cell may be a cylindrical battery cell, a prismatic battery cell, a soft pack battery cell, or a battery cell of another shape. The prismatic battery cell includes a square-case battery cell, a blade-shaped battery cell, or a multi-prismatic battery. The multi-prismatic battery is, for example, a hexagonal prismatic battery. This is not specifically limited in the present disclosure.

In some embodiments, the shell includes an end cover and a housing. The housing is provided with an opening. The end cover closes the opening to form closed space for accommodating materials such as the electrode assembly and the electrolyte. The housing may be provided with one or more openings. There may be one or more end covers.

In some embodiments, at least one electrode terminal is disposed on the shell, and the electrode terminal is electrically connected to a tab. The electrode terminal may be directly connected to the tab, or may be indirectly connected to the tab by using the adapter tab. The electrode terminal may be disposed on the end cover, or may be disposed on the housing.

In some embodiments, a pressure relief mechanism is disposed on the shell. The pressure relief mechanism is configured to release an internal pressure of the battery cell.

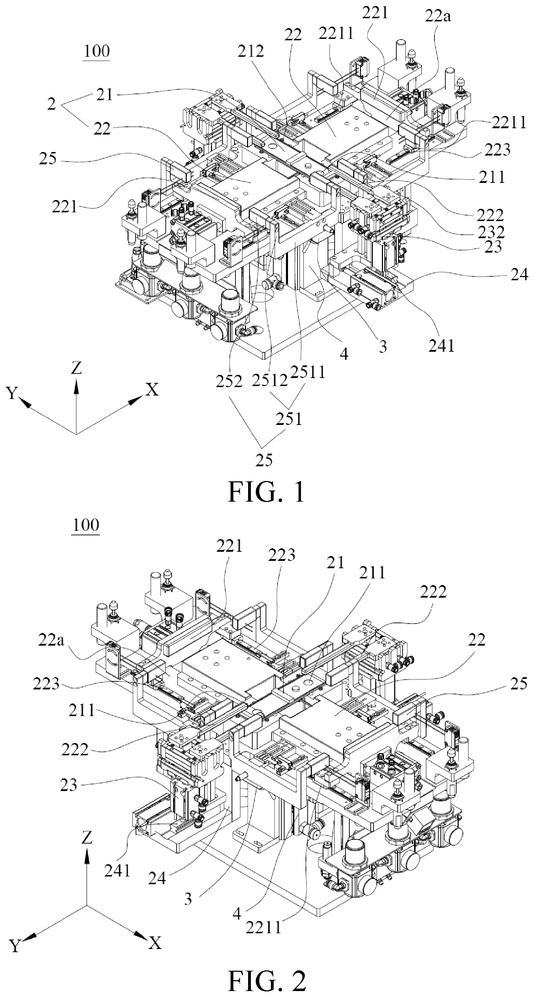

Some embodiments of the present disclosure are described in detail below with reference to FIG. 1 to FIG. 10.

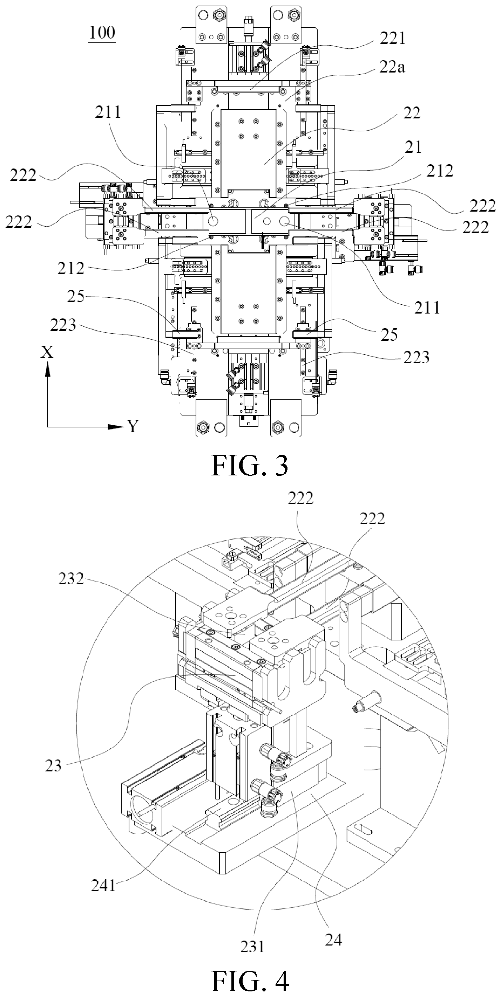

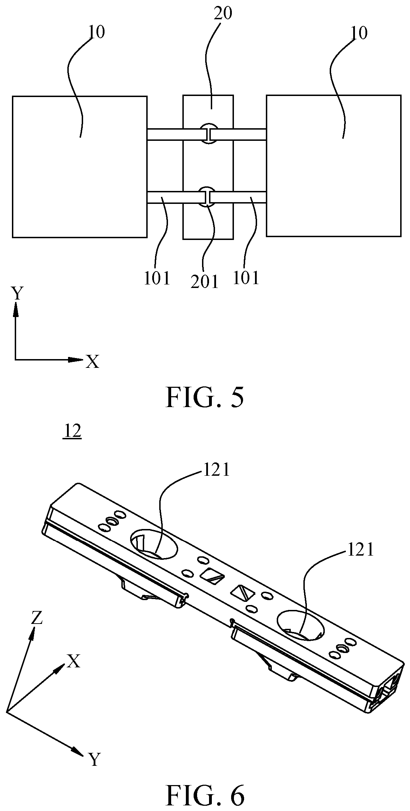

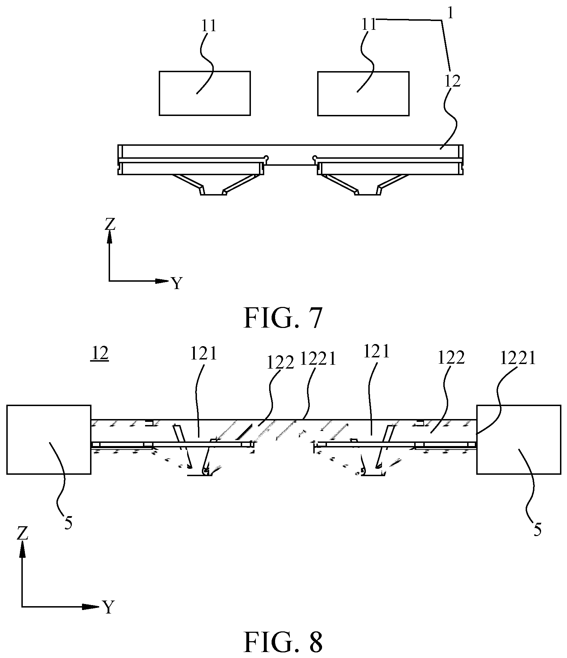

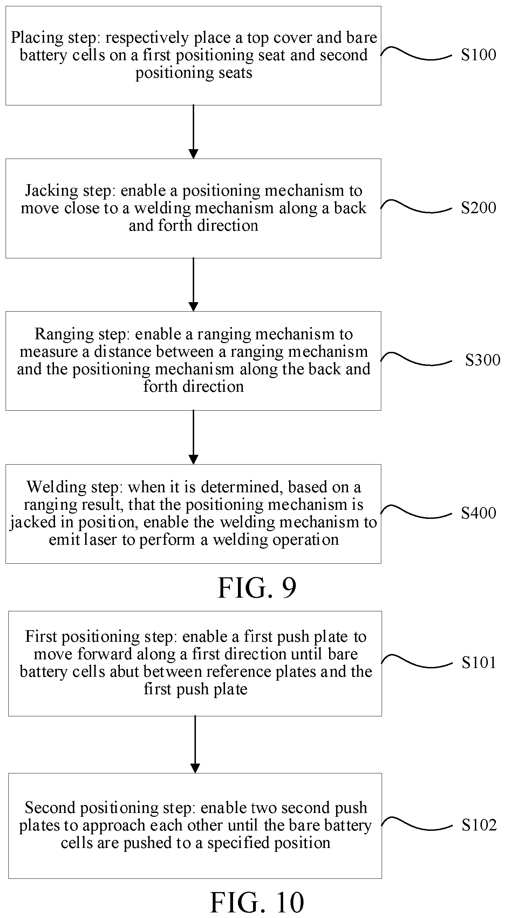

FIG. 1 is a schematic diagram of a three-dimensional structure of a welding device according to some embodiments of the present disclosure. FIG. 2 is another schematic diagram of a three-dimensional structure of a welding device according to some embodiments of the present disclosure. FIG. 3 is a schematic diagram of a planar structure of a welding device according to some embodiments of the present disclosure. FIG. 4 is a schematic diagram of a partially enlarged view of a structure of a welding device according to some embodiments of the present disclosure. FIG. 5 is a schematic diagram of a planar structure when bare battery cells are welded to a top cover according to some embodiments of the present disclosure. FIG. 6 is a schematic diagram of a three-dimensional structure of a pressing plate according to some embodiments of the present disclosure. FIG. 7 is a schematic diagram of planar structures of a laser head and a pressing plate according to some embodiments of the present disclosure. FIG. 8 is a planar cross-sectional view of a pressing plate according to some embodiments of the present disclosure, and schematically shows absorption apparatuses. FIG. 9 is a schematic flowchart of a welding method according to some embodiments of the present disclosure. FIG. 10 is another schematic flowchart of a welding method according to some embodiments of the present disclosure.

In some embodiments of the present disclosure, for ease of description, a first direction, a second direction, and a back and forth direction are set. The first direction, the second direction, and the back and forth direction are directions perpendicular to each other. However, a person skilled in the art should understand that a case in which the three directions are perpendicular to each other is not limited in the embodiments of the present disclosure. For ease of description, as shown by arrows in FIG. 1, FIG. 3, and FIG. 5 to FIG. 8, a direction of an arrow X is used as the first direction, a direction of an arrow Y is used as the second direction, and a direction of an arrow Z is used as the back and forth direction. Sometimes, a direction to which the arrow Z points along the back and forth direction is referred to as "above", and a direction opposite to the direction is referred to as "below".

As shown in FIG. 1 to FIG. 3 and FIG. 4 to FIG. 6, according to a first aspect of the present disclosure, a welding device 100 is provided. The welding device 100 is configured to weld, to a top cover 20, adapter tabs 101 connected to bare battery cells 10. The welding device 100 includes a welding mechanism 1, a positioning mechanism 2, and a ranging mechanism 3. The welding mechanism 1 includes a laser head 11. The positioning mechanism 2 includes a first positioning seat 21 configured to place the top cover 20 and second positioning seats 22 configured to place the bare battery cells 10. The positioning mechanism 2 is capable of moving close to or away from the welding mechanism 1 along a back and forth direction. The ranging mechanism 3 is fixedly disposed on a side of the positioning mechanism 2 that is away from the welding mechanism along the back and forth direction. The ranging mechanism is configured to measure a distance between the ranging mechanism 3 and the positioning mechanism 2 along the back and forth direction.

In this embodiment of the present disclosure, the welding device 100 is configured to weld the adapter tabs 101 (which are also referred to as connection bars) to the top cover 20. The adapter tabs 101 have been welded to tabs of the bare battery cells 10 in advance.

Specifically, as shown in FIG. 5, in a battery production process, generally, two bare battery cells 10 are symmetrically arranged, and tabs of the two bare battery cells 10 each are welded to an adapter tab 101. The adapter tab may include an integral adapter tab or a split adapter tab. Different types of adapter tabs may be selected based on a welding type of the tab and the adapter tab 101. The top cover 20 is usually placed between the two symmetrically arranged bare battery cells 10, and the adapter tabs 101 of the two bare battery cells 10 are welded and fixed to the top cover 20, to conduct a current. After welding is completed, the two bare battery cells 10 are folded in half, to finally form a battery with the top cover 20.

The welding mechanism 1 is a mechanism for implementing a welding function of the welding device 100. In this embodiment of the present disclosure, the welding mechanism 1 is a laser welding mechanism including the laser head 11. The laser head 11 is configured to emit a laser beam with a high energy density, to perform welding on a to-be-welded part through heat conduction. Laser welding has a high welding speed and high precision.

The positioning mechanism 2 is located below the welding mechanism 1, and is configured to position the bare battery cells 10 and the top cover 20, so that a relative position between the bare battery cells 10 and the top cover 20 is not deviated during welding, thereby improving welding stability. Specifically, the positioning mechanism 2 includes the first positioning seat 21 and the second positioning seats 22. The first positioning seat 21 is configured to place the top cover 20. The second positioning seats 22 are configured to place the bare battery cells 10. The top cover 20 and the bare battery cells 10 are respectively placed in different positioning seats of the positioning mechanism 2. In this way, the top cover 20 and the bare battery cells 10 can be separately positioned, so that positioning precision is higher. Structures of the first positioning seat 21 and the second positioning seats 22 are described in detail below.

In this embodiment of the present disclosure, after the bare battery cells 10 and the top cover 20 are respectively positioned in the second positioning seats 22 and the first positioning seat 21, the adapter tabs 101 of the bare battery cells 10 lap above the top cover 20 to form a to-be-welded part, and the positioning mechanism 2 entirely moves, under driving of a jacking apparatus, toward the welding mechanism 1 along the back and forth direction, so that the to-be-welded part is in contact with a pressing plate 12 (which is described in detail below) of the welding mechanism 1. Therefore, the to-be-welded part is tightly pressed, thereby facilitating a subsequent welding operation.

In a laser welding process, the positioning mechanism 2 needs to move along the back and forth direction, so that the to-be-welded part is in contact with the pressing plate 12. In addition, a distance between the to-be-welded part and the laser head 11 also needs to be proper, that is, the laser welding mechanism has a proper defocus amount during welding. The defocus amount refers to a distance between a laser focus and an action substance (the to-be-welded part). During welding, the defocus amount greatly affects welding quality. When the defocus amount is excessively large, a density of power acting on the to-be-welded part is excessively low, and welding cannot be implemented. When the defocus amount is excessively small, a density of power acting on the to-be-welded part is excessively high, and consequently, a laser irradiation point is easily fused, and a surface of the to-be-welded part is damaged. Therefore, before welding, the distance between the to-be-welded part and the laser head 11 needs to be moderate, so that the defocus amount is stable.

For example, according to an actual situation, a distance by which the positioning mechanism 2 needs to move along the back and forth direction may be set in advance in an upper computer, so that the distance between the to-be-welded part of a workpiece positioned in the positioning mechanism and the laser head 11 can be proper after displacement is completed. Therefore, the pressing plate 12 can have a good tightly pressing function, and the defocus amount is proper during welding. In other words, the ranging mechanism 3 measures the distance between the ranging mechanism 3 and the positioning mechanism 2 (the to-be-welded part) along the back and forth direction, and is essentially configured to control the distance between the to-be-welded part and the laser head 11 for welding.

However, displacement of the positioning mechanism 2 along the back and forth direction may not be very precise each time, and may have a deviation. As a result, there is a probability that a bad case occurs, such as poor welding or pseudo welding, and the welding quality is seriously affected. However, in the related technology, occurrence of this bad case cannot be avoided in advance, and whether welding is successful can be detected only after welding is completed. As a result, production costs are greatly increased.

Therefore, the ranging mechanism 3 is disposed in the welding device 100 in this embodiment of the present disclosure. After the positioning mechanism 2 moves close to the welding mechanism 1 along the back and forth direction, the distance between the ranging mechanism 3 and the positioning mechanism 2 along the back and forth direction can be measured in an automatic manner by using the ranging mechanism 3, to determine whether the positioning mechanism 2 moves in position, that is, determine whether the positioning mechanism 2 moves along the back and forth direction by a preset distance. The determining may be implemented by using hardware such as a determining circuit, or may be implemented by using software. In addition, if a determining result is that the positioning mechanism 2 fails to move by the preset distance, adjustment may be manually or automatically performed, so that the distance between the positioning mechanism 2 and the welding mechanism 1 is proper. Further, displacement of the positioning mechanism 2 is more reliable, the defocus amount of the welding mechanism 1 is more stable during welding, a probability that pseudo welding, poor welding, or the like occurs during welding performed by the welding mechanism 1 is reduced, reliability and stability of the welding device 100 are improved, the welding quality is better, and an automation degree is high. In addition, after it is detected, based on a ranging result of the ranging mechanism 3, that the positioning mechanism 2 fails to move by the preset distance, displacement can be adjusted in time, or it is determined in advance that welding fails, so that the probability that the bad case occurs during welding is reduced in advance, and the production costs are effectively reduced.

In addition, in this embodiment of the present disclosure, because the ranging mechanism 3 is fixedly disposed on the side of the positioning mechanism 2 that is away from the welding mechanism along the back and forth direction, that is, disposed below the positioning mechanism 2, space below the positioning mechanism 2 can be effectively used, thereby improving space utilization. In addition, interference is not easily caused among the ranging mechanism 3, the bare battery cells 10 and the top cover 20 that are placed in the positioning mechanism 2, and the welding mechanism 1 above the positioning mechanism 2, so that larger operation space can be provided for placement of the bare battery cells 10 and the top cover 20 and a welding operation of the welding mechanism 1, a probability that a bad case occurs, for example, the bare battery cells 10 or the top cover 20 is moved or worn, can be reduced, and measurement accuracy of the ranging mechanism 3 and working stability of the welding mechanism can be improved. In addition, because the to-be-welded part is tightly pressed by the pressing plate 12 during welding, when the ranging mechanism 3 is disposed on the side of the positioning mechanism 2 that is away from the welding structure along the back and forth direction, the ranging mechanism 3 does not easily interfere with the pressing plate 12, so that the pressing plate 12 can better tightly press the to-be-welded part, and the ranging mechanism 3 can measure the distance between the ranging mechanism 3 and the to-be-welded part without affecting work of the pressing plate 12. Therefore, a movement distance of the to-be-welded part along the back and forth direction is obtained, and whether the distance between the to-be-welded part and the welding mechanism is proper is further determined based on the movement distance of the to-be-welded part along the back and forth direction.

For example, the welding mechanism 1, the positioning mechanism 2, and the ranging mechanism 3 may all be disposed on a rack of the welding device 100.

In some embodiments of the present disclosure, the ranging mechanism 3 includes a laser rangefinder, and the laser rangefinder is fixedly disposed on a side of the first positioning seat 21 that is away from the welding mechanism 1 along the back and forth direction. An avoidance hole 211 is provided on the first positioning seat 21. When the top cover 20 is placed on the first positioning seat 21, the avoidance hole 211 is configured to enable laser emitted by the laser rangefinder to pass through and be irradiated on a position of a terminal post 201 of the top cover 20.

The laser rangefinder has high precision, a small error, and a high measurement speed, so that the ranging mechanism can efficiently and rapidly perform measurement, and accuracy of a measurement result is high.

Certainly, a type of the ranging mechanism 3 is not specifically limited in this embodiment of the present disclosure, and the ranging mechanism 3 may alternatively be any other proper ranging mechanism such as an infrared rangefinder.

In addition, because the adapter tabs 101 are welded to the terminal post 201 of the top cover 20, and the adapter tabs 101 and the terminal post 201 of the top cover 20 are formed into a to-be-welded part, the first positioning seat 21 is provided with the avoidance hole 211 that enables the laser emitted by the laser rangefinder to pass through and be irradiated on the terminal post 201 of the top cover 20, so that the laser rangefinder can more accurately measure a distance between the laser rangefinder and the terminal post of the top cover (the to-be-welded part), thereby further improving the measurement accuracy of the ranging mechanism 3. Therefore, the defocus amount of the welding mechanism is more stable.

Because one bare battery cell 10 includes a positive tab and a negative tab, there are also two adapter tabs 101 to be welded to the tabs. Similarly, a positive terminal post and a negative terminal post are formed on the top cover 20, and respectively form, with the two adapter tabs 101, two to-be-welded parts. Therefore, in this embodiment of the present disclosure, there are two ranging mechanisms 3, and the two ranging mechanisms 3 are arranged spaced away along the second direction. In addition, two avoidance holes 211 are provided on the first positioning seat 21, and are respectively configured to enable laser emitted by the two laser rangefinders to be irradiated on the two terminal posts 201 of the top cover 20, so that the measurement accuracy of the ranging mechanism 3 is further improved, and each of the to-be-welded parts has good welding stability, thereby ensuring the welding quality.

Certainly, a person skilled in the art should understand that a quantity of the ranging mechanisms 3 and a quantity of the avoidance holes 211 are not specifically limited in this embodiment of the present disclosure. In some other embodiments, when there are one or more (more than two) to-be-welded parts, the quantity of the ranging mechanisms 3 and the quantity of the avoidance holes 211 may also be only one or more (more than two).

In some embodiments of the present disclosure, the welding mechanism 1 further includes the pressing plate 12, and the pressing plate 12 is configured to press the top cover 20 along the back and forth direction during welding. The welding device 100 includes a jacking apparatus 4. Under driving of the jacking apparatus 4, the positioning mechanism 2 is capable of rising along the back and forth direction to a welding position at which the top cover 20 is enabled to be in contact with the pressing plate 12, or falling from the welding position.

The welding mechanism 1 further includes the pressing plate 12, and the pressing plate 12 is disposed below the laser head 11. The pressing plate 12 is configured to tightly press a to-be-welded workpiece during a welding operation, to reduce a probability that welding parts of the to-be-welded workpiece move relative to each other and affect the welding quality. In this embodiment of the present disclosure, the pressing plate 12 is configured to press the top cover 20 and the adapter tabs 101 that lap on the top cover 20.

Specifically, as shown in FIG. 6 and FIG. 8, a welding channel 121 extending through the pressing plate 12 along the back and forth direction is formed on the pressing plate 12. After the pressing plate 12 tightly presses the adapter tabs 101 and the top cover 20, the laser beam emitted by the laser head 11 may perform the welding operation on the adapter tabs 101 and the top cover 20 through the welding channel 121.

In this embodiment of the present disclosure, a shape of the welding channel 121 is generally a truncated cone. To be specific, an equivalent diameter of the welding channel 121 along the first direction gradually decreases. An opening of one end that has a largest equivalent diameter faces the laser head, to help the laser beam more accurately enter the welding channel 121 and focus in the welding channel 121. An opening of one end that has a smallest equivalent diameter faces the to-be-welded part of the workpiece, to help energy of the laser beam entering the welding channel 121 better focus on the to-be-welded part of the workpiece, thereby reducing a probability that welding is poor due to insufficient welding energy.

Certainly, a person skilled in the art should understand that, in some other embodiments, the shape of the welding channel 121 may alternatively be a cone, a column, a combination of a column and a truncated cone, or any other proper shape. The shape of the welding channel 121 is not specifically limited in this embodiment of the present disclosure.

For example, the jacking apparatus 4 may be fixed to the rack of the welding device 100.

In this embodiment of the present disclosure, the welding position is a position at which the to-be-welded part can be in contact with the pressing plate 12 and has a proper distance (that is, has a proper defocus amount) to the laser head 11.

After positioning of the bare battery cells 10 and the top cover 20 in the positioning mechanism 2 is completed, movement close to the welding mechanism 1 along the back and forth direction can be simply implemented by using the jacking apparatus 4, which has a simple structure, an easy control manner, and a high automation degree.

In addition, under driving of the jacking apparatus 4, the positioning mechanism 2 can rise to the welding position in contact with the pressing plate 12, and the pressing plate 12 can press against the to-be-welded part, to reduce a probability that a to-be-welded workpiece moves relative to the positioning mechanism or to-be-welded parts move relative to each other, thereby effectively improving welding stability.

The jacking apparatus includes, but is not limited to, a jacking cylinder.

In some embodiments of the present disclosure, the welding mechanism 1 further includes the pressing plate 12, and the pressing plate 12 is configured to press the top cover 20 along the back and forth direction during welding. The welding device 100 further includes absorption apparatuses 5, configured to provide a negative pressure. A dust removal channel 122 is formed inside the pressing plate 12, and the dust removal channel 122 extends through the pressing plate 12 and is connected to the absorption apparatuses 5.

When the welding mechanism 1 performs welding on the to-be-welded part, a large quantity of impurities such as dirt, particles, and welding slags are generated. If the impurities are adhered between a welding surface of the adapter tab 101 and a welding surface of the top cover 20, welding defects such as a spatter and a pinhole occur on the welding surface, and the welding quality is seriously affected.

Therefore, as shown in FIG. 8, the welding device 100 in this embodiment of the present disclosure is further provided with the absorption apparatuses 5, and the absorption apparatuses 5 can provide a negative pressure, so that the impurities, such as the welding slags, generated by the welding mechanism 1 during welding may be discharged to the outside of the welding device 100 by the absorption apparatuses 5 through the dust removal channel 122 inside the pressing plate 12, thereby implementing dust removal during welding, reducing a probability that the welding slags spatter, improving cleanliness of a welding environment, and further reducing a probability that the impurities are adhered to the welding surface, and improving the welding quality.

A plurality of dust removal ports 1221 are provided in the dust removal channel 122, and the dust removal ports 1221 communicate with the dust removal channel 122. Each of the dust removal ports 1221 is correspondingly connected to one of the absorption apparatuses 5. Alternatively, the dust removal ports 1221 are respectively connected to dust removal tubes, and the dust removal tubes are jointly connected to one of the absorption apparatuses 5. The plurality of dust removal ports 1221 are provided, so that the impurities can be more thoroughly removed, thereby further improving the welding quality.

A shape of the dust removal channel 122 and a quantity of the dust removal ports 1221 are not specifically limited in this embodiment of the present disclosure.

For example, the dust removal port 1221 may be provided on an end surface of the pressing plate 12 along the second direction.

For another example, the dust removal port 1221 may be provided on an end surface of the pressing plate 12 that faces away from the positioning mechanism 2 along the back and forth direction.

In some embodiments of the present disclosure, the first positioning seat 21 includes a plurality of dowels 212. The plurality of dowels 212 enclose to form a positioning region. The positioning region is used to position the top cover 20.

Optionally, a quantity of the dowels 212 is eight. The eight dowels 212 enclose to form the positioning region used to place the top cover 20. The positioning region is generally rectangular, and corresponds to a shape of the top cover 20.

Therefore, positioning of the top cover 20 can be more facilitated, so that the top cover 20 can be always located in the positioning region enclosed by the dowels 212 during welding, and deviation does not easily occur, thereby improving welding reliability.

Certainly, the quantity of the dowels 212 is not specifically limited in this embodiment of the present disclosure. The quantity of the dowels 212 may alternatively be 6, 10, 12, or the like, and may be specifically set based on an actual size of the top cover 20.

For example, a plurality of through holes into which the dowels 212 are inserted may be provided on a base of the first positioning seat 21, and the dowels 212 are detachably inserted into the through holes. In this way, different quantities of dowels 212 can be inserted at different positions of the first positioning seat 21 based on the actual size and shape of the top cover 20, to form, through enclosing, the positioning region matching the top cover 20. In this way, top covers 20 with different sizes and shapes can be adapted, thereby facilitating improving compatibility of the first positioning seat 21, and further facilitating flexible production.

Certainly, the dowels 212 may alternatively be fixedly connected to the base of the first positioning seat 21.

For example, the dowels 212 may be made of zirconia ceramic. The zirconia ceramic has high hardware and good wear resistance, so that a service life of the dowels 212 can be effectively improved, and maintenance costs are reduced.

Certainly, the dowels 212 may alternatively be made of any other proper material.

Specifically, chamfers are formed from top end surfaces to side circumferential surfaces of the plurality of dowels 212.

Because the chamfers are formed from the top end surfaces to the side circumferential surfaces of the dowels 212, and the chamfers can have a guiding function, the top cover 20 can more smoothly enter the positioning region.

In addition, the chamfers formed by the dowels 212 can further reduce a probability that the top cover 20 is damaged when the top cover 20 enters the positioning region, thereby improving reliability of the positioning mechanism 2.

In some embodiments of the present disclosure, the first positioning seat 21 includes a plurality of position-limit edges. The plurality of position-limit edges enclose to form a positioning region. The positioning region is used to position the top cover 20. A side of the position-limit edges that faces the positioning region has an inclined guide surface.

Optionally, a quantity of the position-limit edges is four. The four position-limit edges enclose to form the positioning region used to place the top cover 20. The positioning region is generally rectangular, and corresponds to a shape of the top cover 20. For example, the four position-limit edges may be integrally formed into an integral structure, or may be split structures and then be assembled together.

Therefore, positioning of the top cover 20 can be more facilitated, so that the top cover 20 can be always located in the positioning region enclosed by the position-limit edges during welding, thereby improving welding reliability.

In addition, because the side of the position-limit edges that faces the positioning region has the inclined guide surface, and the inclined guide surface can have a guiding function, the top cover can more smoothly enter the positioning region.

In addition, the inclined guide surface formed by the position-limit edges can further reduce a probability that the top cover 20 is damaged when the top cover 20 enters the positioning region, thereby improving reliability of the positioning mechanism 2.

For example, the position-limit edges and a base of the first positioning seat 21 may be split structures, and the position-limit edges may be detachably disposed on the base of the first positioning seat 21.

For another example, the position-limit edges and the base of the first positioning seat 21 may be integrally formed into an integral structure.

In some embodiments of the present disclosure, the second positioning seats 22 include a base 22a, a first push plate 221, and two reference plates 222. The first push plate 221 is disposed on the base 22a and capable of moving forward or backward along the first direction, and is configured to push and press the bare battery cells 10 along the first direction. The two reference plates 222 are arranged on opposite sides of the first push plate 221 along the first direction and separated by space used to place the bare battery cells 10. The two reference plates 222 are arranged spaced away along a second direction. The two reference plates are configured to block the bare battery cells 10. The reference plates 222 are capable of performing reciprocating movement before a backoff position and a working position along the second direction. The first direction, the second direction, and the back and forth direction are perpendicular to each other.

When the bare battery cells 10 are grabbed and placed on the second positioning seats 22 by using the grabbing and placing apparatus, the bare battery cells 10 may not be located at a preset position. The preset position herein refers to a position at which the adapter tabs 101 of the bare battery cells 10 can lap on the terminal post 201 of the top cover 20 that is already positioned. Therefore, the second positioning seats 22 further include the first push plate 221. The first push plate 221 can push the bare battery cells 10 along the first direction, and push the bare battery cells 10 to the preset position through a pushing operation of the first push plate 221.

A shape of the first push plate 221 may be a plate that is long along the second direction, or may be a strip, a bar, or the like that is long along the second direction. The shape of the first push plate 221 is not specifically limited provided that the first push plate 221 can push the bare battery cells 10. In addition, a length of the first push plate 221 along the second direction is not specifically limited, provided that the first push plate 221 can push all bare battery cells 10 whose sizes are compatible with the second positioning seat 22.

In addition, because the first push plate 221 moves forward or backward along the first direction to implement the corresponding pushing and pressing operation, the first push plate 221 can adapt to bare battery cells 10 of different sizes, has good compatibility, and facilitates flexible production.

Specifically, in this embodiment of the present disclosure, a first push-plate guide rail 223 extending along the first direction is formed on the base 22a of the second positioning seats 22. The first push plate 221 is supported by the first push-plate guide rail 223 and can move along the first push-plate guide rail 223, so that the bare battery cells 10 can be easily pushed and tightly clamped along the first direction.

A first push-plate sliding member 2211 is disposed below the first push plate 221. The first push-plate sliding member 2211 and the first push plate 221 may be integrally formed into an integral structure, or may be formed into split structures and be assembled together. The first push-plate sliding member 2211 includes, but is not limited to, a sliding plate, a sliding block, a sliding rod, or a sliding component formed by combining a plurality of structures.

In this embodiment of the present disclosure, the first push-plate guide rail 223 is of a ridged protrusion structure. The first push-plate sliding member 2211 is provided with a groove. The first push plate 221 can perform reciprocating movement along the first push-plate guide rail 223 through cooperation between the groove and the protrusion structure.

In some other embodiments, the first push-plate guide rail 223 may alternatively be in a shape of a groove, and the first push-plate sliding member 2211 is provided with a protrusion portion. The first push plate 221 can perform reciprocating movement along the first push-plate guide rail 223 through cooperation between the protrusion portion and the groove.

For example, the first push-plate sliding member 2211 may perform reciprocating movement along the first push-plate guide rail 223 under driving of a driving apparatus, to drive the first push plate 221 to perform reciprocating movement along the first push-plate guide rail 223. The driving apparatus includes, but is not limited to, an electric motor and a cylinder.

A quantity of the first push-plate guide rails 223 is not specifically limited in this embodiment of the present disclosure. Only one first push-plate guide rail 223 may be disposed, or two, three, or more first push-plate guide rails 223 may be disposed, provided that the first push plate 221 can move along the first push-plate guide rail 223.

A person skilled in the art should understand that, when there are a plurality of first push-plate guide rails 223, a plurality of first push-plate sliding members 2211 corresponding to the quantity of the first push-plate guide rails 223 should be correspondingly disposed. Alternatively, when only one first push-plate sliding member 2211 is disposed, cooperation structures (for example, grooves or protrusion portions) whose quantity is the same as a quantity of first push-plate guide rails 223 should be correspondingly disposed on the first push-plate sliding member 2211, so that the one first push-plate sliding member 2211 can move along the plurality of first push-plate guide rails 223.

In some embodiments of the present disclosure, there are two first push-plate guide rails 223, and the two first push-plate guide rails 223 are arranged spaced away on two sides of the base 22a along the second direction.

Therefore, the first push plate 221 can be supported by the two first push-plate guide rails 223, so that stability is higher, and friction when the first push plate 221 moves is further reduced. Therefore, the first push plate 221 can more smoothly move along the first direction through cooperation with the two first push-plate guide rails 223, thereby increasing reliability and stability when the first push plate 221 moves along the first direction.

In some other embodiments, one first push-plate guide rail 223 may be disposed on the base 22a of the second positioning seats 22, and the first push-plate guide rail 223 is disposed in a middle region of the base 22a. Alternatively, three first push-plate guide rails 223 may be disposed on the base 22a of the second positioning seats 22, and the three first push-plate guide rails 223 are uniformly arranged spaced away on the base 22a along the second direction.

The second positioning seats 22 further include the reference plates 222. The reference plates 222 can limit a position at which the bare battery cells 10 are finally pushed in position, and can enable the bare battery cells 10 to be well fixed between the first push plate 221 and the reference plates 222 after the pushing operation performed by the first push plate 221 ends, thereby implementing good positioning, reducing a probability that the bare battery cells 10 move during welding, and improving the welding reliability.

In this embodiment of the present disclosure, generally, the top cover 20 is first placed in the first positioning seat 21 for positioning, then the bare battery cells 10 are placed in the second positioning seats 22, and the bare battery cells 10 are moved in a direction toward the first positioning seat 21 through the pushing operation of the first push plate 221, so that the bare battery cells 10 can be tightly clamped and fixed between the first push plate 221 and the reference plates 222, and the adapter tabs 101 of the bare battery cells 10 can lap on the terminal post 201 of the top cover 20, thereby completing positioning of the bare battery cells 10.

Therefore, the reference plates 222 are arranged close to the first positioning seat 21 of the positioning mechanism 2 and are higher than the first positioning seat 21 along the back and forth direction, so that the adapter tabs 101 of the bare battery cells 10 can pass below the reference plates 222 and lap on the top cover 20.

In this embodiment of the present disclosure, there are two reference plates 222. The two reference plates 222 are arranged spaced away along the second direction, and the two reference plates 222 can perform reciprocating movement between the backoff position and the working position along the second direction. Therefore, the reference plate 222 can move to the backoff position along the second direction when the first positioning seat 21 positions the top cover 20, so that interference with the top cover 20 is not easily caused, a probability that the top cover 20 is damaged is reduced, and placement and positioning of the top cover 20 are further facilitated. In addition, the reference plates 222 can further move to the working position along the second direction when the second positioning seats 22 position the bare battery cells 10, so that a better position-limit function is achieved for the bare battery cells 10, and positioning of the bare battery cells 10 is further facilitated.

In some embodiments of the present disclosure, as shown in FIG. 1, FIG. 2, and FIG. 4, the two reference plates 222 are respectively disposed on two mobile stands 23. The two mobile stands 23 are arranged spaced away along the second direction on opposite sides of the positioning mechanism 2, and are connected to the positioning mechanism 2 via a connection platform 24. A mobile-stand guide rail 241 extending along the second direction is provided on the connection platform 24, and the mobile stands 23 are disposed on the mobile-stand guide rail 241 in a manner in which the mobile stands 23 are capable of moving along the mobile-stand guide rail 241.

Therefore, movement of the two reference plates 222 between the working position and the backoff position along the second direction can be easily implemented by using the mobile stands 23, a structure is simple, and a control manner is easy.

In addition, the mobile-stand guide rail 241 can reduce friction and shake when the mobile stands 23 move along the second direction, so that movement of the mobile stands 23 is smoother and more stable, and therefore, movement that is of the reference plates 222 disposed on the mobile stands 23 and that is along the second direction is smoother and more stable, and reliability is better. In addition, energy consumption is small, which is more beneficial to energy conservation and environment protection.

A mobile-stand sliding member 231 is disposed below the mobile stand 23. The mobile-stand sliding member 231 and the mobile stand 23 may be integrally formed into an integral structure, or may be formed into split structures and be assembled together. The mobile-stand sliding member 231 includes, but is not limited to, a sliding plate, a sliding block, a sliding rod, or a sliding component formed by combining a plurality of structures.

For example, the mobile-stand sliding member 231 may perform reciprocating movement along the mobile-stand guide rail 241 under driving of a driving apparatus, to drive the mobile stand 23 to perform reciprocating movement along the first push-plate guide rail 223. The driving apparatus includes, but is not limited to, an electric motor.

In this embodiment of the present disclosure, the mobile-stand guide rail 241 is of a ridged protrusion structure. The mobile-stand sliding member 231 is provided with a groove. The mobile stand 23 can perform reciprocating movement along the mobile-stand guide rail 241 through cooperation between the groove and the protrusion structure.

In some other embodiments, the mobile-stand guide rail 241 may alternatively be in a shape of a groove, and the mobile-stand sliding member 231 is provided with a protrusion portion. The mobile stand 23 can perform reciprocating movement along the mobile-stand guide rail 241 through cooperation between the protrusion portion and the groove.

In some embodiments of the present disclosure, there are two second positioning seats 22, and the two second positioning seats 22 are located on opposite sides of the first positioning seat 21 along the first direction.

Therefore, the positioning mechanism 2 can simultaneously position and fix two bare battery cells 10, so that positioning efficiency is improved, thereby improving welding efficiency.

The two second positioning seats 22 have a same structure, and details are not described herein again.

In this embodiment of the present disclosure, only one mobile stand 23 is disposed on one side of the positioning mechanism 2 along the second direction, and reference plates 222 of the two second positioning seats 22 that are located on a same side along the second direction may be disposed on a same mobile stand 23. In this way, it is beneficial to reduce a quantity of components and reduce assembly difficulty.

Certainly, in some other embodiments, only two mobile stands 23 are disposed on one side of the positioning mechanism 2 along the second direction, and the reference plates 222 of the two second positioning seats 22 that are located on the same side along the second direction may alternatively be respectively disposed on the two mobile stands 23.

In some embodiments of the present disclosure, a reference-plate guide rail 232 extending along the first direction is provided on each of the mobile stands 23. Each of the reference plates 222 of each of the second positioning seats 22 is disposed on the reference-plate guide rail 232 in a manner in which the reference plate 222 is capable of moving along the reference-plate guide rail 232.

Structures, shapes, and sizes of adapter tabs 101 of different bare battery cells 10 may be different. Therefore, when adapter tabs 101 of two different bare battery cells 10 are welded to the top cover 20, a spacing distance between the two bare battery cells 10 also differs.

However, in this embodiment of the present disclosure, the reference plates 222 of each of the second positioning seats 22 can further perform reciprocating movement along the first direction along the reference-plate guide rail 232, so that a spacing distance that is between the two bare battery cells 10 respectively positioned in the two second positioning seats 22 and that is along the first direction can be defined based on different situations, adaptability of the positioning mechanism 2 is better, and positioning precision is higher.

In addition, the reference plate 222 can be directly or indirectly supported by the reference-plate guide rail 232, and can move along the reference-plate guide rail 232 under driving of a driving apparatus. The reference-plate guide rail 232 can reduce friction and shake when the reference plates 222 move along the first direction, so that movement of the reference plates 222 is smoother and more stable, and reliability is better. In addition, energy consumption is small, which is more beneficial to energy conservation and environment protection.

The driving apparatus includes, but is not limited to, an electric motor and an opening and closing cylinder.

In some embodiments of the present disclosure, the second positioning seats 22 further include the base 22a and two second push plates 25. The two second push plates 25 are arranged opposite to each other along the second direction and are disposed on the base 22a in a manner in which the two second push plates 25 are capable of approaching or retreating from each other along the second direction. The two second push plates 25 are configured to push and press the bare battery cells 10 along the second direction.

When the two second push plates 25 are at an initial position, the two second push plates 25 are arranged spaced away on opposite sides of the base 22a along the second direction, and the two second push plates 25 can approach or retreat from each other along the second direction. Therefore, a pushing and pressing operation along the second direction can be performed, through an action that the two second push plates 25 approach each other, on the bare battery cells 10 placed on the second positioning seats 22, so that the bare battery cells 10 are centered, to be specific, a center line of the bare battery cells 10 is aligned with a middle position between the two second push plates 25. Therefore, the adapter tabs 101 of the bare battery cells 10 can lap on the terminal post 201 of the top cover 20, thereby improving the positioning precision. In addition, the bare battery cells 10 can be tightly clamped between the two second push plates 25. Therefore, the bare battery cells 10 are positioned along the second direction, a probability that the bare battery cells 10 move during welding is reduced, and the welding reliability is improved.

In addition, because the two second push plates 25 move close to each other along the second direction to implement positioning, tight clamping, and fixing of the bare battery cells 10, the second push plates 25 can adapt to bare battery cells of different sizes, have good compatibility, and facilitate flexible production.

For example, the two second push plates 25 are connected to a lead screw. The lead screw extends along the second direction and is rotatably disposed on the base 22a. The two second push plates 25 can approach or retreat from each other along the lead screw as the lead screw rotates. Therefore, movement that the two second push plates 25 approach each other can be implemented through rotation of the lead screw, so that the bare battery cells 10 can be easily and reliably positioned by using a simple structure and in an automatic manner.

For another example, a second-push-plate guide rail is formed on the base 22a. The second-push-plate guide rail extends along the second direction. The two second push plates 25 are disposed on the second-push-plate guide rail in a manner in which the two second push plates 25 can move along the second-push-plate guide rail.

A movement manner of the second push plates 25 is not specifically limited in this embodiment of the present disclosure, provided that the two second push plates 25 can approach or retreat from each other.

Specifically, as shown in FIG. 1 and FIG. 2, the second push plate 25 includes a plate-shaped member 251 and pushing blocks 252. The plate-shaped member 251 is generally in a "U" shape, and specifically includes a first plate body 2511 extending along the first direction and two second plate bodies 2512 extending along the back and forth direction. The two second plate bodies 2512 are arranged at opposite ends of the first plate body 2511 along the first direction, and there are two pushing blocks 252. The two pushing blocks 252 are respectively arranged at ends of the two second plate bodies 2512 that face away from the first plate body 2511 along the back and forth direction. The pushing blocks 252 are configured to be in contact with surfaces of the bare battery cells 10 along the second direction, to push the bare battery cells 10 to implement positioning along the second direction.

After the positioning mechanism 2 rises in position along the back and forth direction, this structure of the second push plate 25 can reserve large operation space above the second positioning seats 22, so that interference with a component of another apparatus or mechanism above the positioning mechanism 2 is not easily caused, and the reliability of the welding device 100 can be improved.

According to a third aspect of the present disclosure, a welding system is provided. The welding system is configured to weld bare battery cells 10 to a top cover 20. The welding system includes a top-cover conveyor, a bare-battery-cell conveyor, the welding device 100 provided according to the first aspect of the present disclosure, and a grabbing and placing apparatus. The top-cover conveyor is configured to convey the top cover 20. The bare-battery-cell conveyor is configured to convey the bare battery cells 10 connected to adapter tabs 101. The grabbing and placing apparatus is configured to grab the top cover 20 on the top-cover conveyor and the bare battery cells 10 on the bare-battery-cell conveyor, and respectively place the top cover 20 and the bare battery cells 10 in a first positioning seat 21 and second positioning seats 22 of a positioning mechanism 2 of the welding device 100, to weld the adapter tabs 101 on the bare battery cells 10 to the top cover 20 by using a welding mechanism 1 of the welding device 100.

For example, the bare-battery-cell conveyor and the top-cover conveyor each may be a conveying belt, for example, may be a strip such as a belt, or may be a plurality of roll shafts arranged in parallel, or may be a plurality of chains.

The top cover 20 and the bare battery cells 10 are respectively conveyed on the top-cover conveyor and the bare-battery-cell conveyor, and the top cover and the bare battery cells can be grabbed and placed in the positioning mechanism 2 of the welding device 100 in an automatic manner by using the grabbing and placing apparatus. Therefore, an automation degree of the welding system can be improved, thereby improving production efficiency of an entire line.

For example, the grabbing and placing apparatus includes, but is not limited to, a manipulator.

In addition, because the top cover 20 and the bare battery cells 10 can be respectively positioned in the first positioning seat 21 and the second positioning seats 22 of the positioning mechanism 2, during welding performed by the welding device 100, neither the top cover 20 nor the bare battery cells 10 easily move, so that welding reliability can be improved.

In addition, because the welding device 100 includes a ranging mechanism 3, displacement that is of the positioning mechanism 2 and that is close to the welding mechanism 1 is more reliable, a defocus amount of the welding mechanism 1 is more stable during welding, a probability that pseudo welding, poor welding, or the like occurs during welding performed by the welding mechanism 1 is reduced, and reliability and stability of the welding device 100 are improved.

An embodiment of the present disclosure further provides a welding method. A welding device 100 is used to weld adapter tabs 101 on bare battery cells 10 to a top cover 20. The welding device 100 includes a welding mechanism 1, a positioning mechanism 2, and a ranging mechanism 3. The positioning mechanism 2 comprises a first positioning seat 21 configured to place the top cover 20 and second positioning seats 22 configured to place the bare battery cells 10. The positioning mechanism 2 is capable of moving close to or away from the welding mechanism 1 along a back and forth direction. As shown in FIG. 9, the welding method includes the following steps.

S100: Placing step: respectively place the top cover and the bare battery cells on the first positioning seat and the second positioning seats.

S200: Jacking step: enable the positioning mechanism to move close to the welding mechanism along the back and forth direction.

S300: Ranging step: enable the ranging mechanism to measure a distance between the ranging mechanism and the positioning mechanism along the back and forth direction.

S400: Welding step: when it is determined, based on a ranging result, that the positioning mechanism is jacked in position, enable the welding mechanism to emit laser to perform a welding operation.

Therefore, after the positioning mechanism 2 moves close to the welding mechanism 1 along the back and forth direction, the distance between the ranging mechanism 3 and the positioning mechanism 2 along the back and forth direction can be measured by using the ranging mechanism 3, to determine whether the positioning mechanism 2 moves in position, that is, determine whether the positioning mechanism 2 moves by a preset distance. Therefore, a distance between the positioning mechanism 2 and the welding mechanism 1 is proper. Further, displacement of the positioning mechanism 2 is more reliable, a defocus amount of the welding mechanism 1 is more stable during welding, a probability that pseudo welding, poor welding, or the like occurs during welding performed by the welding mechanism 1 is reduced, reliability and stability of the welding device 100 are improved, and welding quality is better.

In some embodiments of the present disclosure, the second positioning seats 22 include a first push plate 221, two second push plates 25, and reference plates 222. The reference plates 222 are arranged on opposite sides of the first push plate 221 along a first direction. The first push plate 221 can move forward or backward along the first direction. The two second push plates 25 are arranged opposite to each other along a second direction, and are constructed to be capable of approaching or retreating from each other along the second direction.

As shown in FIG. 10, the placing step further includes the following steps.

S101: First positioning step: enable the first push plate to move forward along the first direction until the bare battery cells abut between the reference plates and the first push plate.

S102: Second positioning step: enable the two second push plates to approach each other until the bare battery cells are pushed to a specified position.

Therefore, the bare battery cells placed in the second positioning seats 22 can be pushed to the specified position according to the first positioning step and the second positioning step, to implement good positioning, so that the adapter tabs 101 of the bare battery cells 10 can lap a terminal post 201 of the top cover 20, thereby facilitating a subsequent welding operation. In addition, a probability that the bare battery cells 10 move during welding can be reduced, thereby improving welding reliability.

A person skilled in the art may understand that, in the foregoing method of the specific embodiments, a writing sequence of the steps does not mean a strict execution sequence and does not constitute any limitation on an implementation process, and a specific execution sequence of the steps should be determined based on functions and possible internal logic of the steps.

Specific examples of some embodiments of the present disclosure are described below with reference to the accompanying drawings.

In a specific example, a welding device 100 includes a welding mechanism 1, a welding clamp (a positioning mechanism 2), and a laser rangefinder (a ranging mechanism 3).

The welding clamp includes a top-cover positioning channel (a first positioning seat 21) and two battery-cell positioning channels (second positioning seats 22), and the top-cover positioning channel is located between the two battery-cell positioning channels. A top cover 20 and battery cells (bare battery cells 10) are respectively placed in the top-cover positioning channel and the battery-cell positioning channel under assistance of a loading manipulator (a grabbing mechanism). An edge of the top-cover positioning channel is fixed by using ceramic dowels (dowels 212). A long-edge direction and a short-edge direction of the top cover each are provided with two dowels, and a total of eight dowels are provided. Tops of the dowels each are a rounded corner. The battery-cell positioning channel includes two groups of clamping air cylinders (a first push plate 221 and a second push plate 25). Surfaces of the battery cells are pushed by using the clamping air cylinders, so that the battery cells are centrally placed and can be tightly clamped and fixed between the two groups of clamping air cylinders. The battery-cell positioning channel further includes two fixing sides (reference plates 222), and the two fixing sides can fix a spacing and a relative position between the two battery cells.

The laser rangefinder is disposed below the top-cover positioning channel, and an irradiation position of the laser rangefinder is a position of a terminal post of the top cover. During welding, a cylinder (a jacking apparatus 4) below the welding clamp raises the welding clamp to a protective pressing plate (a pressing plate 12) of the welding mechanism 1 above. In this case, the laser rangefinder starts working and performs ranging, and a laser head of the welding mechanism is allowed to emit a laser beam to start a welding operation when a ranging structure shows that a position and a distance are proper.

A high-wind-speed dust removal channel 122 is formed inside the protective pressing plate, to evacuate all spattering welding slags during welding, thereby resolving a problem that the welding slags spatter.

The above embodiments are merely intended for describing the technical solutions of the present disclosure rather than for limiting the present disclosure. Although the present disclosure is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of the present disclosure. They should all be covered in the scope of the present disclosure. In particular, the various technical features mentioned in the various embodiments can be combined in any way, as long as there is no structural conflict.

## Claims

1. A welding device, configured to weld, to a top cover, adapter tabs connected to bare battery cells, wherein the welding device comprises:
a welding mechanism, comprising a laser head;
a positioning mechanism, comprising a first positioning seat configured to place the top cover and second positioning seats configured to place the bare battery cells, wherein the positioning mechanism is capable of moving close to or away from the welding mechanism along a back and forth direction; and
a ranging mechanism, wherein the ranging mechanism is fixedly disposed on a side of the positioning mechanism that is away from the welding mechanism along the back and forth direction, and the ranging mechanism is configured to measure a distance between the ranging mechanism and the positioning mechanism along the back and forth direction.

2. The welding device according to claim 1, wherein
the ranging mechanism comprises a laser rangefinder, and the laser rangefinder is fixedly disposed on a side of the first positioning seat that is away from the welding mechanism along the back and forth direction; and
an avoidance hole is provided on the first positioning seat, and when the top cover is placed on the first positioning seat, the avoidance hole is configured to enable laser emitted by the laser rangefinder to pass through and be irradiated on a position of a terminal post of the top cover.

3. The welding device according to claim 1 or 2, wherein
the welding mechanism further comprises a pressing plate, and the pressing plate is configured to press the top cover along the back and forth direction during welding; and
the welding device comprises a jacking apparatus, and under driving of the jacking apparatus, the positioning mechanism is capable of rising along the back and forth direction to a welding position at which the top cover is enabled to be in contact with the pressing plate, or falling from the welding position.

4. The welding device according to claim 3, wherein
a welding channel extending through the pressing plate along the back and forth direction is formed on the pressing plate, and an equivalent diameter of the welding channel along a first direction gradually decreases;
an opening of one end of the welding channel that has a largest equivalent diameter faces the laser head, and an opening of one end of the welding channel that has a smallest equivalent diameter faces the top cover; and
the first direction is perpendicular to the back and forth direction.

5. The welding device according to any one of claims 1 to 4, wherein
the welding mechanism further comprises the pressing plate, and the pressing plate is configured to press the top cover along the back and forth direction during welding;
the welding device further comprises absorption apparatuses, configured to provide a negative pressure; and
a dust removal channel is formed inside the pressing plate, and the dust removal channel extends through the pressing plate and is connected to the absorption apparatuses.

6. The welding device according to claim 5, wherein
a plurality of dust removal ports are provided in the dust removal channel, and the dust removal ports communicate with the dust removal channel; and
each of the dust removal ports is correspondingly connected to one of the absorption apparatuses, or the dust removal ports are respectively connected to dust removal tubes, and the dust removal tubes are jointly connected to one of the absorption apparatuses.

7. The welding device according to any one of claims 1 to 6, wherein
the first positioning seat comprises a plurality of dowels, the plurality of dowels enclose to form a positioning region, and the positioning region is used to position the top cover.

8. The welding device according to claim 7, wherein
chamfers are formed from top end surfaces to side circumferential surfaces of the plurality of dowels.

9. The welding device according to any one of claims 1 to 6, wherein
the first positioning seat comprises a plurality of position-limit edges, the plurality of position-limit edges enclose to form a positioning region, and the positioning region is used to position the top cover; and
a side of the position-limit edges that faces the positioning region has an inclined guide surface.

10. The welding device according to any one of claims 1 to 9, wherein the second positioning seats comprise:
a base;
a first push plate, wherein the first push plate is disposed on the base and capable of moving forward or backward along the first direction, and is configured to push and press the bare battery cells along the first direction; and
two reference plates, wherein the two reference plates are arranged on opposite sides of the first push plate along the first direction and separated by space used to place the bare battery cells, the two reference plates are arranged spaced away along a second direction, the two reference plates are configured to block the bare battery cells, and the reference plates are capable of performing reciprocating movement before a backoff position and a working position along the second direction, wherein
the first direction, the second direction, and the back and forth direction are perpendicular to each other.

11. The welding device according to claim 10, wherein
a first push-plate guide rail extending along the first direction is formed on the base, a first push-plate sliding member is formed on a side of the first push plate that faces the first push-plate guide rail, and the first push plate performs reciprocating movement along the first push-plate guide rail through cooperation between the first push-plate sliding member and the first push-plate guide rail.

12. The welding device according to claim 10 or 11, wherein
the two reference plates are respectively disposed on two mobile stands, and the two mobile stands are arranged spaced away along the second direction on opposite sides of the positioning mechanism, and are connected to the positioning mechanism via a connection platform; and
a mobile-stand guide rail extending along the second direction is provided on the connection platform, and the mobile stands are disposed on the mobile-stand guide rail in a manner in which the mobile stands are capable of moving along the mobile-stand guide rail.

13. The welding device according to any one of claims 10 to 12, wherein
there are two second positioning seats, and the two second positioning seats are located on opposite sides of the first positioning seat along the first direction.

14. The welding device according to claim 13, wherein
a reference-plate guide rail extending along the first direction is provided on each of the mobile stands, and each of the reference plates of each of the second positioning seats is disposed on the reference-plate guide rail in a manner in which the reference plate is capable of moving along the reference-plate guide rail.

15. The welding device according to any one of claims 1 to 14, wherein the second positioning seats further comprise:
the base; and
two second push plates, wherein the two second push plates are arranged opposite to each other along the second direction and are disposed on the base in a manner in which the two second push plates are capable of approaching or retreating from each other along the second direction, and the two second push plates are configured to push and press the bare battery cells along the second direction.

16. The welding device according to claim 15, wherein
the second positioning seats further comprise a lead screw extending along the second direction, and the lead screw is rotatably disposed on the base; and
the two second push plates are connected to the lead screw, and are capable of approaching or retreating from each other along the lead screw as the lead screw rotates.

17. The welding device according to claim 15 or 16, wherein
the second push plates each comprises a plate-shaped member and two pushing blocks; and
the plate-shaped member comprises a first plate body extending along the first direction and two second plate bodies extending along the back and forth direction, the two second plate bodies are arranged at opposite ends of the first plate body along the first direction, and the two pushing blocks are respectively arranged on sides of the two second plate bodies that face away from the first plate body along the back and forth direction.

18. A welding method, wherein a welding device is used to weld adapter tabs on bare battery cells to a top cover, the welding device comprises a welding mechanism, a positioning mechanism, and a ranging mechanism, the positioning mechanism comprises a first positioning seat configured to place the top cover and second positioning seats configured to place the bare battery cells, and the positioning mechanism is capable of moving close to or away from the welding mechanism along a back and forth direction; and
the welding method comprises:
a placing step: respectively placing the top cover and the bare battery cells on the first positioning seat and the second positioning seats;
a jacking step: enabling the positioning mechanism to move close to the welding mechanism along the back and forth direction;
a ranging step: enabling the ranging mechanism to measure a distance between the ranging mechanism and the positioning mechanism along the back and forth direction; and
a welding step: when it is determined, based on a ranging result, that the positioning mechanism is jacked in position, enabling the welding mechanism to emit laser to perform a welding operation.

19. The welding method according to claim 18, wherein the placing step further comprises:
a first positioning step: enabling a first push plate to move forward along a first direction until the bare battery cells abut between reference plates and the first push plate; and
a second positioning step: enabling two second push plates to approach each other until the bare battery cells are pushed to a specified position.

20. A welding system, configured to weld bare battery cells to a top cover, wherein the welding system comprises:
a top-cover conveyor, configured to convey the top cover;
a bare-battery-cell conveyor, configured to convey the bare battery cells connected to adapter tabs;
the welding device according to any one of claims 1 to 17; and
a grabbing and placing apparatus, configured to grab the top cover on the top-cover conveyor and the bare battery cells on the bare-battery-cell conveyor, and respectively place the top cover and the bare battery cells in a first positioning seat and second positioning seats of a positioning mechanism of the welding device, to weld the adapter tabs on the bare battery cells to the top cover by using a welding mechanism of the welding device.
